# EUROPÄISCHE PATENTANMELDUNG

(11) **EP 0 809 337 A2**
(43) Veröffentlichungstag der Anmeldung: **26.11.1997**
(21) Anmeldenummer: 97106365.6
(22) Anmeldetag: 17.04.1997
(51) Int. Cl.: H02B 1/38

(54) **Türverriegelung**

(30) Priorität: 20.04.1996 DE 19615627
(71) Anmelder: May & Steffens GmbH & Co. KG Elektrotechnische Fabrik, 50259 Pulheim (DE); ABN Werner Braun GmbH, 74196 Neuenstadt (DE); AEG Niederspannungstechnik GmbH, 31785 Hameln (DE)
(72) Erfinder: Weynans, Jörg, 50259 Pulheim (DE); Braun, Andreas, 74196 Neuenstadt (DE); Hessenthaler, Ralph, 74196 Neuenstadt (DE); Pries, Jürgen, 31785 Hameln (DE)
(74) Vertreter: Freischem, Stephan

(57) **Zusammenfassung**

Die Erfindung betrifft einen Verteilerschrank, insbesondere Kleinverteilerschrank, mit einem Gehäuse und einer Tür, welche an einer Türkante über Scharniere schwenkbar an dem Gehäuse angelenkt ist und an der anderen Türkante mittels einer Verriegelungsvorrichtung mit dem Gehäuse verriegelbar ist, wobei die Verriegelungsvorrichtung ein von Hand bewegliches Greifelement zum Entriegeln der Tür aufweist.
Um einen Verteilerschrank derart weiterzubilden, daß seine Tür insbesondere auch bei leicht verzogenem Türrahmen zuverlässig und sicher verriegelbar ist, sind mit dem Greifelement (15) zwei Riegelteile (10) der Verriegelungsvorrichtung gekoppelt, welche mit Widerlagern (9) an beiden Endbereichen der zweiten Türkante (8) zusammenwirken.

## Beschreibung

Die Erfindung betrifft einen Verteilerschrank mit einem Gehäuse und einer Tür, welche im Bereich einer ersten Türkante über Scharniere schwenkbar an dem Gehäuse angelenkt ist und im Bereich einer der ersten Türkante gegenüberliegenden zweiten Türkante mittels einer Verriegelungsvorrichtung mit dem Gehäuse verriegelbar ist, wobei die Verriegelungsvorrichtung ein von Hand bewegliches Greifelement zum Entriegeln der Tür aufweist.

Insbesondere betrifft die Erfindung einen Kleinverteilerschrank zur Installation der Sicherungsautomaten für eine Wohneinheit. Derartige Verteilerschränke müssen in der Regel sehr selten geöffnet werden und werden daher möglichst einfach und kostengünstig ausgeführt. Verteilerschränke werden sowohl für die Aufputz-Montage als auch für die Unterputz-Montage hergestellt. Im ersten Fall verfügen sie über ein recht verwindungssteifes Gehäuse, welches an eine Gebäudewand geschraubt werden kann. Im zweiten Fall kann das Gehäuse sehr einfach ausgebildet sein und wird in einer Ausnehmung oder Öffnung in einer Gebäudewand versenkt, wobei ein Blendrahmen lösbar an dem Gehäuse bzw. direkt an der Wand befestigbar ist, welcher die Tür und deren Verriegelungsvorrichtung trägt.

Aufgabe der Erfindung ist es, einen Verteilerschrank derart weiterzubilden, daß trotz kostengünstiger Fertigung seine Tür zuverlässig und sicher verriegelbar ist.

Diese Aufgabe wird erfindungsgemäß dadurch gelöst, daß mit dem Greifelement zwei Riegelteile der Verriegelungsvorrichtung gekoppelt sind, welche mit Widerlagern an beiden Endbereichen der schwenkbaren, zweiten Türkante zusammenwirken.

Die rechteckige Tür, die an zwei Ecken über Scharniere fest mit dem Gehäuse verbunden ist, ist in verriegelter Stellung an den zwei anderen Ecken mittels der Riegelteile an dem Gehäuse festgehalten. So ist gewährleistet, daß die Tür immer bündig gegen das Gehäuse anliegt, auch wenn dieses aufgrund von Alterungsvorgängen oder beim Unterputz-Einbau durch Unebenheiten des Untergrundes leicht verzogen ist. Trotz der beiden Riegelteile läßt sich die Tür mit einer Hand öffnen, da beide Riegelteile mit dem einen Greifelement zum Entriegeln der Verriegelungsvorrichtung gekoppelt sind.

Eine bevorzugte, einfache Ausbildung der Verriegelungsvorrichtung umfaßt eine Schubstange, an der zwei hakenförmige Riegelteile und das Greifelement angeformt sind. Die Schubstange ist in einer Schiebeführung des Gehäuses des Verteilerschrankes verschiebbar gelagert. Das Greifelement ist in der Regel ein Vorsprung an einem Ende der Schubstange. Vorzugsweise hält eine Rückstellfeder die Schubstange in Schließstellung, so daß die Tür des Verteilerschranks sich nicht ungewollt öffnet. Die hakenförmigen Greifelemente weisen vorzugsweise eine Schrägfläche auf, so daß beim Schließen der Tür die Schubstange entgegen der Federkraft verschoben wird und in der vollständig geschlossenen Stellung der Tür die Riegelteile in die Widerlager (Aufnahmeöffnungen im Kantenbereich der Tür) eingreifen.

Bei dem Unterputz-Verteilerschrank ist dem Gehäuse ein Blendrahmen aus Profilstreben zugeordnet, der vorzugsweise im Kunststoff-Spritzgießverfahren hergestellt wird. Eine der seitlichen, vertikalen Profilstreben dieses Blendrahmens ist mit der Schiebeführung für die Schubstange versehen.

Vorzugsweise weist die Schiebeführung an beiden Enden eine Einschuböffnung zum Einschieben der Schubstange auf, so daß die Einschieberichtung der Schubstange und damit die Lage des Greifelementes der Schubstange beliebig gewählt werden kann. Ist der Verteilerschrank auf einer niedrigen Höhe installiert, so ist es vorteilhaft, das Greifelement am oberen Ende der Schiebeführung anzuordnen. Auf diese Weise wird die Zugänglichkeit des Greifelements für kleine Kinder erschwert. Ist der Verteilerschrank dagegen hoch montiert, so sollte für eine einfache Handhabung das Greifelement am unteren Ende der Schiebeführung angeordnet sein.

Weiterhin sollte die Schubstange mit mindestens einer schräg zur Verschieberichtung verlaufenden Rampenfläche versehen sein, welche beim Verschieben der Schubstange gegen die Tür drückt, nachdem die Riegelelemente die Tür freigegeben haben. So wird beim Entriegeln die Tür um eine gewisse Strecke aus ihrer Schließstellung herausgedrückt, und es entsteht ein Spalt zwischen der freien Türkante und dem Gehäuse. Anschließend kann die Tür zum Öffnen einfach mit der Hand erfaßt werden. Selbstverständlich kann eine derartige schräge Rampenfläche auch mit einer Verriegelungsvorrichtung kombiniert werden, welche keine Schubstange, sondern beispielsweise Seilzüge, Hebel oder ähnliche Kopplungsmittel zum Betätigen der Riegelteile aufweist.

Bei einer vorteilhaften einfachen Ausführungsform wirken die hakenförmigen Riegelteile der Schubstange auf Widerlageröffnungen in den abgewinkelten Bereichen der waagerecht verlaufenden Türkanten. Die Rampenflächen wirken auf die Ränder dieser abgewinkelten Türkanten und sind an der Schubstange an zwei Stellen in unmittelbarer Nähe zum hakenförmigen Riegelteil angeordnet.

Eine zusätzliche Sicherung gegen unbefugtes Öffnen des Verteilerschrankes kann dadurch erreicht werden, daß eine mit einem abziehbaren Schlüssel betätigbare Schließvorrichtung an dem Gehäuse angeordnet ist, mit der die Verriegelungsvorrichtung in der die Tür geschlossen haltenden Schließstellung verschließbar ist. Vorzugsweise wird diese Schließvorrichtung von einem Schließzylinder gebildet, der an einem lösbaren Abschnitt des Blendrahmens angeordnet ist. Dieser lösbare Abschnitt in Form einer Haube verschließt auch eine Einschuböffnung für die Schubstange. Mittels des Schließzylinders ist ein Schließteil bewegbar, welches in eine Ausnehmung an einem Ende der Schubstange eingreift. Die Schließvorrichtung ist in den beigefügten Zeichnungen nicht dargestellt.

Bei herkömmlichen Verteilerschränken werden die Scharniere für die Tür in der Regel durch elastisch gehaltene Scharnierzapfen gebildet. Diese können direkt aus dem Blechmaterial einer abgewinkelten Türkante einer Blechtür herausgestanzt sein. In anderen Fällen wird ein Metallstift über eine als Druckfeder ausgebildete Spiralfeder in seiner Montagestellung in der Tür gehalten und greift in zwei Zapfenaufnahmen im Gehäuse ein.

Es ist eine weitere Aufgabe der Erfindung, einen Verteilerschrank mit derartigen Scharnieren zu schaffen, dessen Tür bei weiterhin kostengünstiger Herstellung leicht zu montieren und zu entfernen ist.

Diese Aufgabe wird erfindungsgemäß dadurch gelöst, daß jedes elastische Halteelement von einem spritzgegossenen Kunststoffteil gebildet wird, welches bei geöffnetem Schrank von Hand ergreifbar ist.

Kleine spritzgegossene Kunststoffteile sind insbesondere bei großer Stückzahl sehr kostengünstig in der Herstellung. Durch die freie Zugänglichkeit dieser elastischen Halteelemente aus Kunststoff kann beim Montieren oder Demontieren ein Scharnierzapfen durch Verformung seines Halteelements zurückgezogen werden, so daß sich die Tür in die Türaufnahme einfügen oder daraus herausziehen läßt. Ein derartiges Scharnier ist auch ohne die erfindungsgemäße Verriegelungsvorrichtung äußerst vorteilhaft einsetzbar.

Wenn das Gehäuse des Schranks im Scharnierbereich selbst aus spritzgegossenem Kunststoff gefertigt ist, können elastisch verbiegbare Zungen, die von der Vorderseite des Gehäuses her zugänglich sind, angeformt sein, welche einen Scharnierzapfen tragen. Dies ist insbesondere bei dem Kunststoff-Blendrahmen eines Verteilerschranks für den Unterputz-Einbau sinnvoll.

Um ein Abbrechen der Kunststoffzungen zu vermeiden, kann jeweils ein Anschlag zur Begrenzung der Durchbiegung jeweils einer Zunge vorgesehen werden.

Die Scharnierzapfen können äußerst kostengünstig aus einem mehrfach abwinkelten starren Drahtstück gebildet werden, welches in dem Gehäuse bzw. dem Blendrahmen verschiebbar hinter einer vorderen Deckwandung geführt ist, wobei ein U-förmig gebogener Bereich ein Fenster in der Deckwandung durchragt und die elastische Zunge umgreift. Das freie Ende des Drahtstücks ist zweifach abgewinkelt, so daß es nach Umgreifen des rechten Winkels zwischen der vertikal verlaufenden vorderen Deckwandung und der daran angrenzenden, horizontalen Stirnwandung durch eine Öffnung in dieser Stirnwandung hindurchragt und den freistehenden Scharnierzapfen bildet.

Alternativ können die Widerlageröffnungen an dem Gehäuse angebracht sein und die Halteelemente in der Tür angeordnet sein. Die Tür eines Verteilerschranks besteht in aller Regel aus Blech, welches entlang der Türkanten rechtwinklig abgewinkelt ist. Die Halteelemente aus Kunststoff sind in den beiden einander gegenüberliegenden Eckbereichen einer vertikalen Türkante zu befestigen und umfassen eine Zapfenführung, die mit einer Durchlaßöffnung in der abgewinkelten Türkante fluchtet. Die Zapfenführung ist über einen Basissteg mit einem T-förmigen Schwenkhebel einstückig verbunden. Ein Ende dieses Schwenkhebels hält den Scharnierzapfen, so daß beim Herunterdrücken des anderen Endes das erste Ende mit dem darin gehaltenen Scharnierzapfen von der Durchlaßöffnung wegschwenkt und den Scharnierzapfen in die Tür hineinzieht, wobei er aus der Widerlageröffnung in dem Gehäuse des Schranks herausgezogen wird.

Auch hier sollte ein Anschlagselement vorgesehen werden, welches den Schwenkbereich des Schwenkhebels des Halteelements begrenzt.

Die einfachste Möglichkeit der Befestigung eines derartigen Halteelements in der Ecke einer Tür sind aus dem Blech der Tür herausgestanzte Rastöffnungen, in welche Rastelemente der Halteelemente einrastbar sind.

Weitere Merkmale und Vorzüge der Erfindung ergeben sich aus den Unteransprüchen und aus der folgenden Zeichnungsbeschreibung.

Die Zeichnungen zeigen in:
- Fig. 1: eine schematische Darstellung der erfindungsgemäßen Verriegelungsvorrichtung in Draufsicht,
- Fig. 2: die Verriegelungsvorrichtung aus Fig. 1 in Seitenansicht,
- Fig. 3: eine vergrößerte Darstellung der oberen Abschnitts der Verriegelungsvorrichtung aus Fig. 2,
- Fig. 4: einen Blendrahmen eines Verteilerschrankes mit einer Schiebeführung für die erfindungsgemäße Verriegelungsvorrichtung sowie einem erfindungsgemäßen Türscharnier,
- Fig. 5: die rechte vertikale Profilstrebe des Blendrahmens aus Fig. 4 in entlang der Schnittlinie V-V geschnittener Darstellung,
- Fig. 6: die linke Profilstrebe des Blendrahmens aus Fig. 4 in entlang der Schnittlinie VI-VI geschnittener Darstellung,
- Fig. 7, 8, 9: drei Ansichten eines abgewinkelten Drahtstücks zur Bildung eines Scharnierzapfens,
- Fig. 10: eine Vorderansicht einer alternativen Ausführungsform der Scharniervorrichtung mit in eine Türecke eingesetztem Halteelements aus Kunststoff für den Scharnierzapfen.

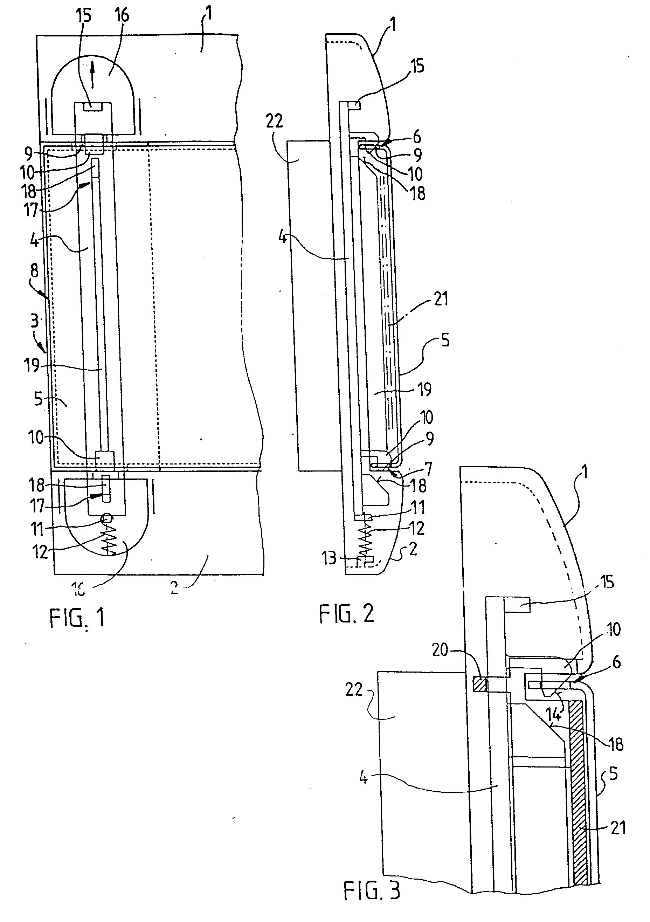

Fig. 1-3 enthalten lediglich schematische Darstellungen der erfindungsgemäßen Verriegelungsvorrichtung und keine streng nach den Regeln für technische Zeichnungen erstellten Konstruktionszeichnungen. In Fig. 1 ist der linke Abschnitt des vorderen Rahmens eines Verteilerschrank-Gehäuses zu erkennen, der im vorliegenden Fall nicht als fester Bestandteil des Gehäuses ausgebildet ist, sondern lösbar daran befestigt werden kann.

Dargestellt sind das linke Ende einer oberen Profilstrebe 1 und einer unteren Profilstrebe 2, welche horizontal verlaufen, sowie die linke vertikale Profilstrebe 3 des Blendrahmens. Die vertikale Profilstrebe 3 bildet eine Aufnahme für eine Schubstange 4, welche in der vertikalen Profilstrebe 3 verschiebbar gelagert ist. Die Einzelteile der Schiebeführung, welche die Schubstange 4 in Längsrichtung der Profilstrebe 3 verschiebbar halten, sind in Fig. 1-3 nicht vollständig dargestellt.

Der Blendrahmen ist durch eine Tür 5 verschlossen, welche aus Stahlblech besteht und deren Türkanten 6,7 abgewinkelt sind. In der oberen und der unteren horizontalen Türkante 6 und 7 sind nahe der frei schwenkbaren vertikalen Türkante 8 Widerlageröffnungen 9 angebracht, in welche je ein hakenförmiges Riegelteil 10 eingreift, welches einstückig mit der Schubstange 4 verbunden ist. Am unteren Ende der Schubstange 4 ist ein Haltestift 11 angeformt, an dem ein Ende einer auf Zug belasteten Rückstellfeder 12 befestigt ist. Das andere Federende umgreift einen Haken 13 am Blendrahmen. Die Rückstellfeder 12 hält die Schubstange in der in Fig. 1-3 dargestellten Schließstellung, in der die hakenförmigen Riegelteile 10 die Widerlageröffnungen 9 in den Türkanten 6,7 durchgreifen.

Die hakenförmigen Riegelteile 10 weisen je eine schrägverlaufende Stirnfläche 14 auf, welche beim Schließen der Tür 5 ein Verschieben der Schubstange 4 nach oben entgegen der Federkraft der Rückstellfeder 12 bewirken, wobei beim weiteren Schließen der Tür 5 die hakenförmigen Riegelteile 10 aufgrund der Federkraft der Rückstellfeder 12 in die Widerlageröffnungen 9 der Türkanten 6,7 einschnappen.

Zum Öffnen der Tür ist ein Greifelement 15 am oberen Ende der Schubstange 4 angeformt, welches durch die obere Einschuböffnung 16 für die Schubstange 4 hindurch ergreifbar ist. Die obere Einschuböffnung 16 ist an der Ecke angeordnet, in der die obere Profilstrebe 1 mit der vertikalen Profilstrebe 3 zusammentrifft. Bei Bedarf kann die obere Einschuböffnung 16 verschließbar ausgebildet sein. Im unteren Eckbereich ist ebenfalls eine Einschuböffnung für die Schubstange 4 angeordnet, die auf jeden Fall verschlossen werden sollte, da die hinter ihr liegenden Teile nach der Installation des Verteilerschrankes nicht mehr zugänglich sein müssen.

Vorzugsweise ist die gesamte vertikale Strebe 3 zu ihrer Mittellinie symmetrisch ausgebildet, so daß die Schubstange 4 ohne weiteres sowohl durch die obere als auch durch die untere Einschuböffnung 16 eingeschoben werden kann und die Lage des Greifelementes 15 hinter der oberen bzw. der unteren Einschuböffnung 16 frei wählbar ist.

Den hakenförmigen Riegelteilen 10 gegenüberliegend ist je ein Ausstoßelement 17 angeordnet, welches eine schräge Rampenfläche 18 aufweist. Beim Hochschieben der Schubstange 4 drücken diese schrägen Rampenflächen 18 gegen die abgewinkelten Türkanten 6,7 nahe der frei schwenkbaren vertikalen Türkante 8 und stoßen diese aus ihrer Schließstellung heraus. Auf diese Weise wird bewirkt, daß die Riegelteile 10 beim Loslassen des Greifelements 15 der Schubstange 4 nicht wieder in die Widerlageröffnungen der abgewinkelten Türkanten 6,7 eingreifen und daß die um einen gewissen Spalt geöffnete Tür 5 von Hand ergriffen werden kann.

Das obere Ausstoßelement 17 ist durch einen Steg 19 verlängert und verläuft bis zum hakenförmigen Riegelteil 10, so daß die Schubstange 4 in ihrem mittleren Abschnitt ein T-förmiges Profil aufweist und eine ausreichende Stabilität erhält.

In Fig. 3 ist ein hinterer Haltesteg 20 sowie eine vordere Deckwandung 21 der vertikalen Profilstrebe 3 eingezeichnet, zwischen denen die Schubstange 4 gehalten ist. Die vordere Deckwandung 21 ist in Fig. 2 lediglich schematisch durch strichpunktierte Linien angedeutet.

Der dargestellte Blendrahmen für einen Kleinverteilerschrank für den Unterputz-Einbau weist an seiner Rückseite eine umlaufende Wandung 22 auf, welche entlang den inneren Längsseiten der Profilstreben 1,2,3 verläuft.

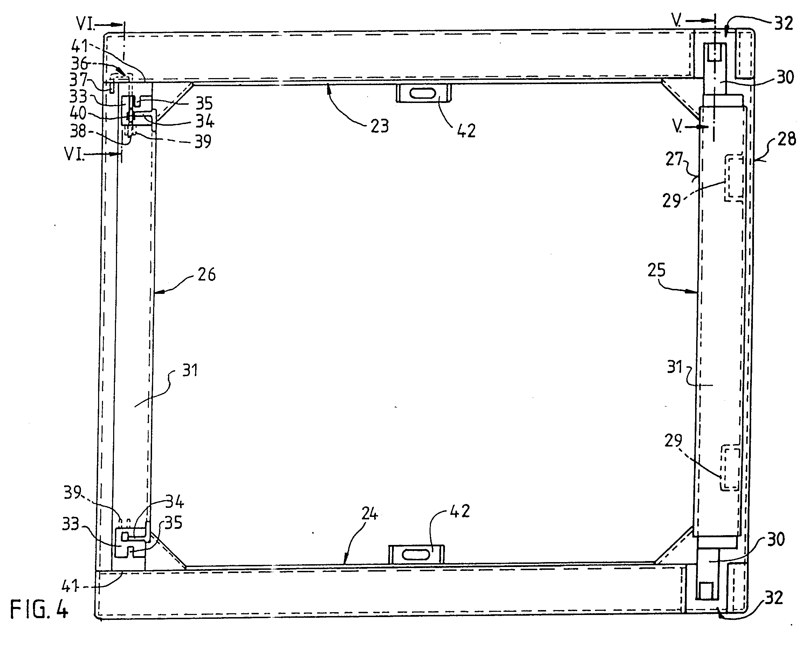

Fig. 4, 5 und 6 zeigen eine Draufsicht auf eine Ausführungsform eines aus spritzgegossenem Kunststoff hergestellten Blendrahmens für die Aufnahme einer erfindungsgemäßen Verriegelungsvorrichtung und einer erfindungsgemäßen Scharniervorrichtung.

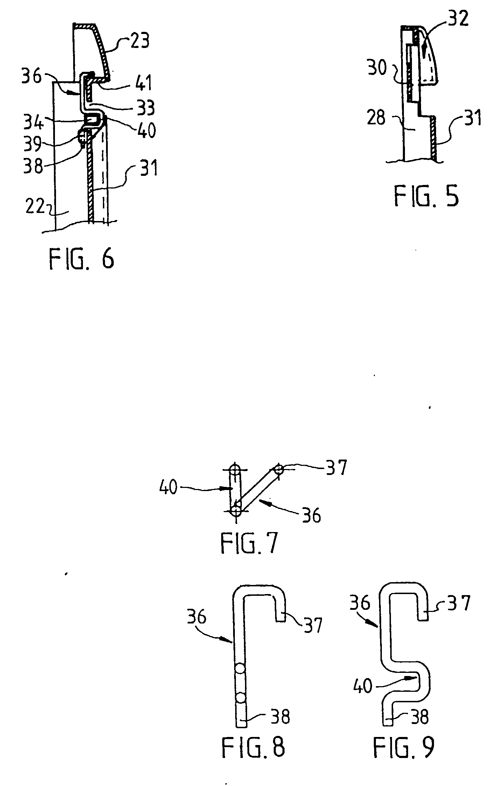

Der Blendrahmen besteht aus einer oberen Profilstrebe 23, einer unteren Profilstrebe 24 sowie zwei seitlichen, vertikalen Profilstreben 25 und 26. Die rechte vertikale Profilstrebe 25, deren oberer Abschnitt in geschnittener Darstellung in Fig. 5 erkennbar ist, umfaßt die Schiebeführung für die Schubstange der Verriegelungsvorrichtung. Die Schiebeführung wird seitlich durch die innere Wandung 27 der Profilstrebe 25 sowie an deren äußere Wandung 28 angeformte Stützkörper 29 begrenzt. Am oberen und unteren Ende ist eine Haltewand 30 angeordnet, welche die Schubstange von hinten abstützt. Die vordere Begrenzung der Schiebeführung bildet die Deckwandung 31 der Profilstrebe 25. Einschuböffnungen 32 für die Schubstange sind sowohl am oberen als auch am unteren Ende der rechten Profilstrebe 25 angeordnet. Sie bestehen, wie insbesondere in Fig. 5 zu erkennen ist, aus Aussparungen in dem gewölbten Profil im Eckbereich, der von der rechten vertikalen Profilstrebe 25 und den horizontalen Profilstreben 23,24 gebildet wird, in Verbindung mit Durchbrüchen in den Wandungen der Profilstrebe 25.

Die in die Schiebeführung einschiebbare Schubstange weist die funktionellen Elemente auf, die in Verbindung mit Fig. 1-3 beschrieben wurden. Sie ist lediglich schmaler und flacher ausgebildet, um in der Schiebeführung in der spritzgegossenen Profilstrebe 25 Platz zu finden.

In der linken Profilstrebe 26 des Blendrahmens aus Fig. 4 ist eine erste Ausführungsform der erfindungsgemäßen Scharniervorrichtung angeordnet. An den oberen Enden weist die Profilstrebe 26 je ein Fenster 33 auf, in das sich eine elastisch biegbare Zunge 34 erstreckt, welche an den spritzgegossenen Blendrahmen angeformt ist. Die elastischen Zungen 34 sind jeweils zur benachbarten horizontal verlaufenden Profilstrebe 23 bzw. 24 hin biegbar, wobei die Biegung durch einen Anschlag 35 begrenzt ist.

Wie in der oberen linken Ecke in Fig. 4 bzw. der Schnittdarstellung in Fig. 6 erkennbar, ist an der elastischen Zunge 34 ein mehrfach abgewinkeltes Drahtstück 36 gehalten, dessen Endbereich den Scharnierzapfen 37 bildet. Der Verlauf des Drahtstückes 36 ergibt sich aus Fig. 7-9. Der untere Endabschnitt 38 liegt hinter der Deckwandung 31 der linken Profilstrebe 26 und ist zwischen zwei kurzen Führungsstegen 39 auf der Rückseite der Deckwandung 31 geführt. Ein U-förmig gebogener Bereich 40 umgreift die elastische Zunge 34, wobei das Drahtstück 36 oberhalb des Fensters 33 wieder auf der Rückseite der Deckwandung 31 verläuft. An die Deckwandung 31 der Profilstrebe 26 schließt sich eine vertikale Stirnwandung 41 an, auf der ein Abschnitt des oberen, mehrfach abgewinkelten Endes des Drahtstückes 36 aufliegt. Der von dem Drahtende gebildete Scharnierzapfen 37 ragt durch eine Öffnung in der Stirnwandung 41 hindurch. Durch Ergreifen des U-förmigen Bereichs 40 des Drahtes bzw. der elastischen Zunge 34 und Ausüben einer Druckkraft nach oben kann der Scharnierzapfen 37 weitgehend durch die Stirnwandung 41 hindurch nach oben zurückgezogen werden, so daß sich eine von ihm gehaltene Tür, in deren Randbereich die Aufnahmen für die Scharnierzapfen angeordnet sind, problemlos entfernen läßt. Auf gleiche Weise wird eine Tür montiert, wobei ein entsprechend gebogenes Drahtstück im unteren Endbereich der Profilstrebe 26 im Bereich des Fensters 33 von der elastischen Zunge 34 gehalten ist, so daß ebenfalls ein Scharnierzapfen 37 durch die untere Stirnwandung 41 hindurchragt.

In Fig. 4 sind die Befestigungslaschen 42 für die Befestigung des Blendrahmens am Gehäuse des Verteilerschranks bzw. am Mauerwerk zu erkennen. Bei einem Aufputz-Verteilerschrank können die Profilstreben 23,24,25,26 als fester Bestandteil des Schrankgehäuses ausgebildet sein.

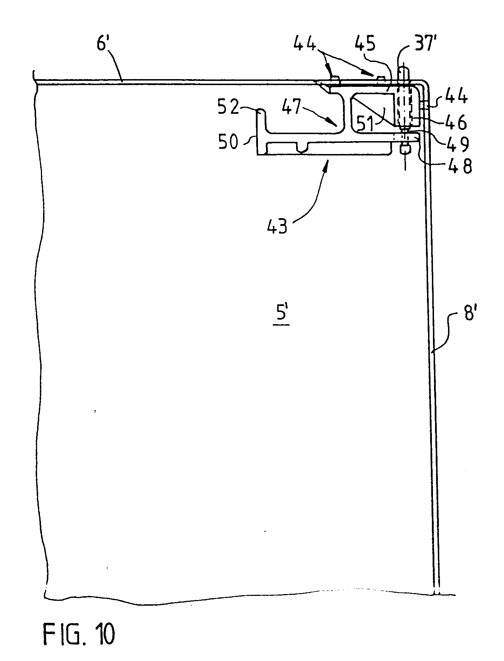

Fig. 10 zeigt eine alternative Ausführungsform eines elastischen Halteelements 43 aus Kunststoff für den Fall, daß der Scharnierzapfen 37' nicht am Gehäuse des Verteilerschranks, sondern an dessen Tür 5' angeordnet ist. Das Halteelement 43 aus spritzgegossenem Kunststoff ist in einer oberen Ecke und der unteren Ecke (nicht dargestellt) der Tür 5' aus Stahlblech, das zur Bildung der Türkanten 6',8' rechtwinklig abgekantet ist, angeordnet. Hierfür sind Rastöffnungen in den Kanten 6',8' der Tür 5' vorgesehen, welche von Rastelementen 44 des Halteelements 43 durchragt werden. Die Rastelemente 44 können beliebig ausgebildet sein, solange sie dem Halteelement 43 einen sicheren Halt in der Türecke verleihen. Eine Last wird im wesentlichen nicht auf das Halteelement 43 übertragen, da die Tür 5' durch die abgewinkelten, horizontalen Türkanten 6' in ihrer Aufnahme gehalten ist. Das Halteelement 43 kann auch durch beliebige andere Befestigungsverfahren (Kleben, Schweißen) in der Tür 5' befestigt werden.

Das Halteelement 43 besteht aus einem Basissteg 45, an dem die Zapfenführung 46 für den Scharnierzapfen 37' angeformt ist. An den Basissteg ist weiterhin ein T-förmiger Schwenkhebel 47 angeformt, dessen rechtes Ende 48 gabelförmig ausgebildet ist und den Scharnierzapfen 37' hält. Durch Drücken auf das freie Ende 50 des T-förmigen Schwenkhebels 47 wird der Scharnierzapfen 37' in die Tür 5' eingezogen, so daß die Tür 5' in die Türaufnahme des Gehäuses des Verteilerschrankes eingeführt werden kann. Durch Loslassen des freien Endes 50 des Schwenkhebels 47 wird der Scharnierzapfen 37' durch die Öffnung in der abgewinkelten Türkante 6' hindurch aufgrund der elastischen Rückstellkraft des T-förmigen Schwenkhebels 47 nach außen gedrückt und ragt in die Zapfenaufnahme in dem Gehäuse hinein.

Zur Verstärkung des Basisstegs 45 des Halteelements 43 ist eine von dem Fuß des T-förmigen Schwenkhebels 47 schräg zur Zapfenführung 46 verlaufende Verstärkungsrippe 51 vorgesehen. Der Schwenkweg des T-förmigen Schwenkhebels ist durch ein Anschlagselement 52 an seinem freien Ende 50 begrenzt.

### Bezugszeichenliste:

- 1: obere Profilstrebe
- 2: untere Profilstrebe
- 3: linke Profilstrebe
- 4: Schubstange
- 5,5': Tür
- 6,6': abgewinkelte Türkante
- 7: abgewinkelte Türkante
- 8,8': vertikale Türkante
- 9: Widerlageröffnung
- 10: hakenförmiges Riegelteil
- 11: Haltestift
- 12: Rückstellfeder
- 13: Haken
- 14: schräge Stirnfläche
- 15: Greifelement
- 16: Einschuböffnung
- 17: Ausstoßelement
- 18: Rampenfläche
- 19: Steg
- 20: Haltesteg
- 21: Deckwandung
- 22: umlaufende Wandung
- 23: obere Profilstrebe
- 24: untere Profilstrebe
- 25: vertikale Profilstrebe
- 26: vertikale Profilstrebe
- 27: innere Wandung
- 28: äußere Wandung
- 29: Stützkörper
- 30: Haltewand
- 31: Deckwandung
- 32: Einschuböffnung
- 33: Fenster
- 34: elastische Zunge
- 35: Anschlag
- 36: Drahtstück
- 37,37': Scharnierzapfen
- 38: unterer Endabschnitt
- 39: Führungssteg
- 40: U-förmig gebogener Bereich
- 41: Stirnwandung
- 42: Befestigungslasche
- 43: Halteelement
- 44: Rastelement
- 45: Basissteg
- 46: Zapfenführung
- 47: T-förmiger Schwenkhebel
- 48: gabelförmiges Ende
- 49: Einschnürung
- 50: freies Ende
- 51: Verstärkungsrippe
- 52: Anschlagselement

## Patentansprüche

1. Verteilerschrank mit einem Gehäuse und einer Tür (5,5'), welche im Bereich einer ersten Türkante (8') über Scharniere schwenkbar an dem Gehäuse angelenkt ist und im Bereich einer der ersten Türkante (8') gegenüberliegenden zweiten Türkante (8) mittels einer Verriegelungsvorrichtung mit dem Gehäuse verriegelbar ist, wobei die Verriegelungsvorrichtung ein von Hand bewegliches Greifelement (15) zum Entriegeln der Tür (5,5') aufweist, **dadurch gekennzeichnet,** daß mit dem Greifelement (15) zwei Riegelteile (10) der Verriegelungsvorrichtung gekoppelt sind, welche mit Widerlagern (9) an beiden Endbereichen der zweiten Türkante (8) zusammenwirken.

2. Verteilerschrank nach Anspruch 1, **dadurch gekennzeichnet,** daß die zwei Riegelteile (10) und das Greifelement (15) Teile einer Schubstange (4) sind, welche in einer Schiebeführung des Gehäuses verschiebbar gelagert ist.

3. Verteilerschrank nach Anspruch 1 oder 2, **dadurch gekennzeichnet,** daß eine Rückstellfeder (12) die Verriegelungsvorrichtung in der Schließstellung hält.

4. Verteilerschrank nach mindestens einem der vorangehenden Ansprüche, **dadurch gekennzeichnet**, daß sein Gehäuse einen lösbaren Blendrahmen aus Profilstreben (1,2,3;23-26) vorzugsweise aus Kunststoff aufweist und daß die Schiebeführung für die Schubstange (4) in einer vertikalen Profilstrebe (3; 25) des Blendrahmens angeordnet ist.

5. Verteilerschrank nach mindestens einem der vorangehenden Ansprüche, **dadurch gekennzeichnet**, daß das Greifelement (15) an einem Ende der Schubstange (4) angeordnet ist und daß an beiden Enden der Schiebeführung eine Einschuböffnung (16;32) zum Einschieben der Schubstange (4) angeordnet ist.

6. Verteilerschrank nach mindestens einem der vorangehenden Ansprüche, **dadurch gekennzeichnet**, daß die Verriegelungsvorrichtung mindestens eine schräge Rampenfläche (18 ) aufweist, die beim Bewegen der Verriegelungsvorrichtung nach dem Entriegeln nahe der freien zweiten Türkante (8) gegen die Tür (5,5') drückt.

7. Verteilerschrank nach mindestens einem der vorangehenden Ansprüche, **dadurch gekennzeichnet**, daß die Riegelteile (10) hakenförmig ausgebildet sind und Widerlager von Widerlageröffnungen (9) in abgewinkelten Kanten (6,7) der Tür (5) gebildet werden.

8. Verteilerschrank nach mindestens einem der vorangehenden Ansprüche, **dadurch gekennzeichnet**, daß je eine Rampenfläche (18) gegenüber einem Riegelteil (10) angeordnet ist und im Bereich einer Widerlageröffnung (9) gegen die Tür (5) drückt.

9. Verteilerschrank nach mindestens einem der vorangehenden Ansprüche, **dadurch gekennzeichnet,** daß das Gehäuse eine Aufnahme für eine mit einem abziehbaren Schlüssel betätigbare Schließvorrichtung aufweist, mit der die Verriegelungsvorrichtung in ihrer Schließstellung verschließbar ist.

10. Verteilerschrank nach Anspruch 9, **dadurch gekennzeichnet,** daß die Schubstange (4) an einem ihrer Enden eine Ausnehmung aufweist, in die ein Schließteil der Schließvorrichtung eingreift, wobei die Schließvorrichtung von einem an dem Blendrahmen angeordneten Schließzylinder gebildet wird.

11. Verteilerschrank insbesondere nach einem der vorangehenden Ansprüche, mit einem Gehäuse und einer Tür (5'), welche im Bereich einer Türkante (8') über zwei metallische Scharnierzapfen (37;37'), die in je eine Zapfenaufnahme hineinragen, schwenkbar miteinander verbunden sind, wobei die Scharnierzapfen (37,37') jeweils an einem elastischen Halteelement (34;43) gehalten sind, welches zum Herausziehen des Scharnierzapfens (37;37') aus seiner Zapfenaufnahme elastisch verformbar ist, **dadurch gekennzeichnet,** daß jedes elastische Halteelement (34;43) von einem spritzgegossenen Kunststoffteil gebildet wird, welches bei geöffnetem Schrank von Hand ergreifbar ist.

12. Verteilerschrank nach Anspruch 11, **dadurch gekennzeichnet,** daß sein Gehäuse zumindest im Scharnierbereich aus spritzgegossenem Kunststoff gefertigt ist und in den Endabschnitten des Scharnierbereiches je eine elastisch biegbare Zunge (34) aufweist, die das elastisches Halteelement für einen Scharnierzapfen (37) bildet und von der Vorderseite des Gehäuses aus zugänglich ist.

13. Verteilerschrank nach Anspruch 12, **dadurch gekennzeichnet,** daß an seinem Gehäuse Anschläge (35) zur Begrenzung der Durchbiegung je einer der elastischen Zungen (34) angeordnet ist.

14. Verteilerschrank nach Anspruch 13, **dadurch gekennzeichnet,** daß der Scharnierzapfen (37) von einem freien Endabschnitt eines mehrfach abgewinkelten, starren Drahtstücks (36) gebildet wird, welches verschiebbar geführt ist, welches auf der Rückseite einer vorderen Deckwandung (31) des Gehäuses bzw. des Blendrahmens verläuft, welches einen U-förmig gebogenen Bereich (40) umfaßt, der ein Fenster (33) in der Deckwandung (31) durchragt und die in dieses Fenster (33) hineinragende elastische Zunge (34) umgreift, und welches an einem Ende zweifach abgewinkelt ist, wobei sein freier Endabschnitt zur Bildung des Scharnierzapfens (37) eine Öffnung in einer an die Deckwandung (31) im rechten Winkel angrenzende Stirnwand (41) durchragt.

15. Verteilerschrank nach Anspruch 11, mit einer rechteckigen Tür (5') aus Blech, das entlang den Türkanten abgewinkelt ist, **dadurch gekennzeichnet,** daß die elastischen Halteelemente (43) aus Kunststoff in zwei Ecken der Tür (5') befestigt sind, wobei die Halteelemente (43) jeweils eine Zapfenführung (46) aufweisen, welche mit einer Durchlaßöffnung in einer der abgewinkelten Türkanten (6') fluchtet und über einen Basissteg (45) mit einem T-förmigen Schwenkhebel (47) einstückig verbunden ist, an dessen einem Ende das von der Durchlaßöffnung abgewandte Ende des Scharnierzapfens (37') gehalten ist.

16. Verteilerschrank nach Anspruch 15, **dadurch gekennzeichnet,** daß das freie Ende (50) des Schwenkhebels (47) ein den Schwenkbereich des Schwenkhebels (47) begrenzendes Anschlagselement (52) aufweist.

17. Verteilerschrank nach Anspruch 15 oder 16, **dadurch gekennzeichnet,** daß im Bereich der Ecken der Tür (5') Rastöffnungen angeordnet sind, in welche Rastelemente (44) der Halteelemente einrastbar sind.
